(19) **Europäisches Patentamt / European Patent Office / Office européen des brevets**

(11) **EP 3 896 601 A1**

(12) **EUROPEAN PATENT APPLICATION**
published in accordance with Art. 153(4) EPC

(43) Date of publication:
**20.10.2021 Bulletin 2021/42**

(21) Application number: **19895730.0**

(22) Date of filing: **26.11.2019**

(51) Int Cl.:
***G06K 9/00*** (2006.01)

(86) International application number:
**PCT/CN2019/120987**

(87) International publication number:
**WO 2020/119450 (18.06.2020 Gazette 2020/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.12.2018 CN 201811535312**

(71) Applicant: **One Connect Smart Technology Co., Ltd. (Shenzhen)**
**Shenzhen, Guangdong 518000 (CN)**

(72) Inventors:
• **HU, Yifei**
  **Shenzhen, Guangdong 518000 (CN)**
• **XU, Guoqiang**
  **Shenzhen, Guangdong 518000 (CN)**
• **QIU, Han**
  **Shenzhen, Guangdong 518000 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **RISK IDENTIFICATION METHOD EMPLOYING FACIAL IMAGE, DEVICE, COMPUTER APPARATUS, AND STORAGE MEDIUM**

(57)     This application discloses a facial image-based risk recognition method and apparatus, a computer device, and a storage medium, to resolve a problem of inaccurate recognition caused by occluding a face with a hand during video data analysis. The method includes: obtaining video data recorded when a customer answers a preset question; performing image recognition on the video data by using a pre-trained occlusion recognition model, where a recognition result includes hand-occluded facial images and hand-unoccluded facial images; obtaining a hand-occluded facial position corresponding to each hand-occluded facial image, and obtaining a tension degree recognition result based on hand-occluded facial positions corresponding to all the hand-occluded facial images; inputting the hand-unoccluded facial images into a pre-trained security determining model to obtain a risk degree recognition result; and determining a risk warning recognition result based on the tension degree recognition result and the risk degree recognition result, where the video data is risk warning data if the risk warning recognition result is greater than a first preset threshold.

| | |
|---|---|
| Obtain video data recorded when a customer answers a preset question | S10 |
| Perform image recognition on the video data by using a pre-trained occlusion recognition model, where a recognition result includes hand-occluded facial images and hand-unoccluded facial images | S20 |
| Obtain a hand-occluded facial position corresponding to each hand-occluded facial image, and obtain a tension degree recognition result based on hand-occluded facial positions corresponding to all the hand-occluded facial images | S30 |
| Input the hand-unoccluded facial images into a pre-trained security determining model to obtain a risk degree recognition result | S40 |
| Determine a risk warning recognition result based on the tension degree recognition result and the risk degree recognition result, where the video data is risk warning data if the risk warning recognition result is greater than a first preset threshold | S50 |

FIG. 2

**EP 3 896 601 A1**

## Description

This application is based on and claims priority to the Chinese Invention Application No. 201811535312.7, filed on December 14, 2018 and entitled "FACIAL IMAGE-BASED RISK RECOGNITION METHOD AND APPARATUS, COMPUTER DEVICE, AND STORAGE MEDIUM".

## TECHNICAL FIELD

This application relates to the field of intelligent decision making, and in particular, to a facial image-based risk recognition method and apparatus, a computer device, and a storage medium.

## BACKGROUND

At present, during face-to-face loan review of a customer, video data is recorded in real time when the customer answers a question. Microexpressions of the customer in the video data may be analyzed by using a risk recognition model, to determine whether the customer presents a risk. However, the customer may occlude the face with a hand due to excessive tension and other behavior during the face-to-face review. Therefore, analysis using the risk recognition model cannot be performed by recognizing the microexpressions in the video data, resulting in an inaccurate analysis result.

## SUMMARY

Embodiments of this application provide a facial image-based risk recognition method and apparatus, a computer device, and a storage medium, to resolve a problem of inaccurate recognition caused by occluding a face with a hand during video data analysis.

A facial image-based risk recognition method includes:

obtaining video data recorded when a customer answers a preset question;
performing image recognition on the video data by using a pre-trained occlusion recognition model, where a recognition result includes hand-occluded facial images and hand-unoccluded facial images;
obtaining a hand-occluded facial position corresponding to each hand-occluded facial image, and obtaining a tension degree recognition result based on hand-occluded facial positions corresponding to all the hand-occluded facial images;
inputting the hand-unoccluded facial images into a pre-trained security determining model to obtain a risk degree recognition result; and
determining a risk warning recognition result based on the tension degree recognition result and the risk degree recognition result, where the video data is risk warning data if the risk warning

recognition result is greater than a first preset threshold.

A facial image-based risk recognition apparatus includes:

a video data obtaining module, configured to obtain video data recorded when a customer answers a preset question;
an image recognition module, configured to perform image recognition on the video data by using a pre-trained occlusion recognition model, where a recognition result includes hand-occluded facial images and hand-unoccluded facial images;
a first recognition result obtaining module, configured to obtain a hand-occluded facial position corresponding to each hand-occluded facial image, and obtain a tension degree recognition result based on hand-occluded facial positions corresponding to all the hand-occluded facial images;
a second recognition result obtaining module, configured to input the hand-unoccluded facial images into a pre-trained security determining model to obtain a risk degree recognition result; and
a risk determining module, configured to determine a risk warning recognition result based on the tension degree recognition result and the risk degree recognition result, where the video data is risk warning data if the risk warning recognition result is greater than a first preset threshold.

A computer device includes a memory, a processor, and computer-readable instructions stored in the memory and executable on the processor, where the processor implements the following steps when executing the computer-readable instructions:

obtaining video data recorded when a customer answers a preset question;
performing image recognition on the video data by using a pre-trained occlusion recognition model, where a recognition result includes hand-occluded facial images and hand-unoccluded facial images;
obtaining a hand-occluded facial position corresponding to each hand-occluded facial image, and obtaining a tension degree recognition result based on hand-occluded facial positions corresponding to all the hand-occluded facial images;
inputting the hand-unoccluded facial images into a pre-trained security determining model to obtain a risk degree recognition result; and
determining a risk warning recognition result based on the tension degree recognition result and the risk degree recognition result, where the video data is risk warning data if the risk warning recognition result is greater than a first preset threshold.

One or more readable storage media store computer-readable instructions, where the computer-readable storage media store the computer-readable instructions, and when the computer-readable instructions are executed by one or more processors, the one or more processors are caused to perform the following steps:

obtaining video data recorded when a customer answers a preset question;

performing image recognition on the video data by using a pre-trained occlusion recognition model, where a recognition result includes hand-occluded facial images and hand-unoccluded facial images;

obtaining a hand-occluded facial position corresponding to each hand-occluded facial image, and obtaining a tension degree recognition result based on hand-occluded facial positions corresponding to all the hand-occluded facial images;

inputting the hand-unoccluded facial images into a pre-trained security determining model to obtain a risk degree recognition result; and

determining a risk warning recognition result based on the tension degree recognition result and the risk degree recognition result, where the video data is risk warning data if the risk warning recognition result is greater than a first preset threshold.

Details of one or more embodiments of this application are provided in the following accompanying drawings and descriptions. Other features and advantages of this application will become apparent from the specification, accompanying drawings, and claims.

BRIEF DESCRIPTION OF DRAWINGS

To describe the technical solutions in the embodiments of this application more clearly, the following briefly describes the accompanying drawings required for describing the embodiments of this application. Clearly, the accompanying drawings in the following descriptions show merely some embodiments of this application, and persons of ordinary skill in the art can further derive other drawings from these accompanying drawings without creative efforts.

FIG. 1 is a schematic diagram of an application environment of a facial image-based risk recognition method according to an embodiment of this application;

FIG. 2 is a flowchart of a facial image-based risk recognition method according to an embodiment of this application;

FIG. 3 is a flowchart of a facial image-based risk recognition method according to an embodiment of this application;

FIG. 4 is a flowchart of a facial image-based risk recognition method according to an embodiment of this application;

FIG. 5 is a flowchart of a facial image-based risk recognition method according to an embodiment of this application;

FIG. 6 is a flowchart of a facial image-based risk recognition method according to an embodiment of this application;

FIG. 7 is a flowchart of a facial image-based risk recognition method according to an embodiment of this application;

FIG. 8 is a principle block diagram of a facial image-based risk recognition apparatus according to an embodiment of this application; and

FIG. 9 is a schematic diagram of a computer device according to an embodiment of this application.

DESCRIPTION OF EMBODIMENTS

The following clearly and completely describes the technical solutions in the embodiments of this application with reference to the accompanying drawings in the embodiments of this application. Clearly, the described embodiments are merely some rather than all embodiments of this application. All other embodiments obtained by persons of ordinary skill in the art based on the embodiments of this application without any creative efforts shall fall within the protection scope of this application.

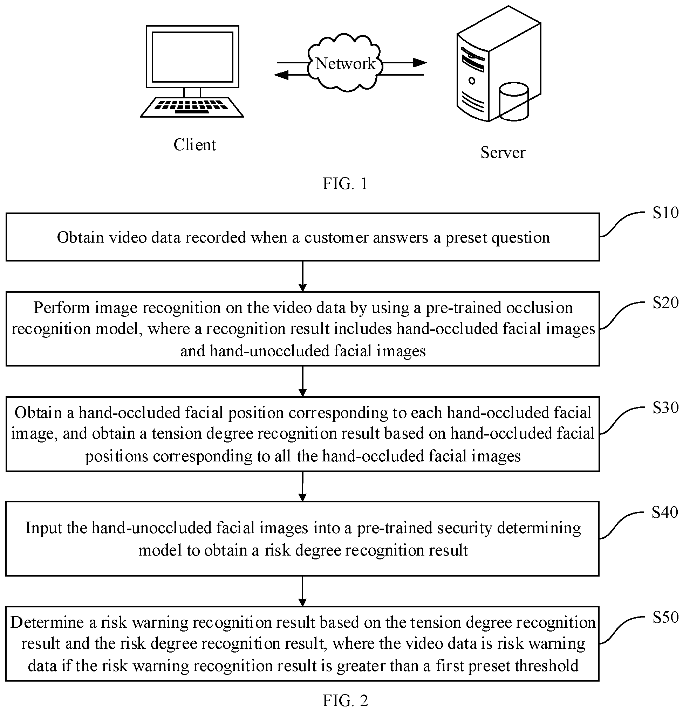

A facial image-based risk recognition method provided in the embodiments of this application can be applied to an application environment in FIG. 1. The facial image-based risk recognition method is applied to a server communicatively connected to a client. The server analyzes video data during face-to-face interview by using a pre-trained occlusion recognition model, to obtain hand-occluded facial images and hand-unoccluded facial images from the video data; and then analyzes the hand-occluded facial images and the hand-unoccluded facial images to respectively obtain a tension degree recognition result and a risk degree recognition result, and determines a risk warning recognition result based on the tension degree recognition result and the risk degree recognition result, to improve risk recognition efficiency. The client may be but is not limited to various personal computers, notebook computers, smartphones, tablet computers, and portable wearable devices. The server may be implemented by using an independent server or a server cluster including a plurality of servers.

In an embodiment, as shown in FIG. 2, a facial image-based risk recognition method is provided. An example in which the method is applied to the server in FIG. 1 is used for description, and the method specifically includes the following steps.

S10. Obtain video data recorded when a customer answers a preset question.

The video data is a video recorded when the customer answers the preset question during face-to-face review. The video data includes at least one frame of to-be-recognized image. The to-be-recognized image includes each frame of image recorded when the customer answers the preset question during the face-to-face review. A microexpression of the customer when answering the preset question is collected from each frame of to-be-recognized image.

Specifically, a question (i.e., the preset question) to be asked during the face-to-face review is preconfigured in the server. During the video face-to-face review, the server invokes the preset question and the customer can answer the preset question, and the server obtains, in real time, the video data recorded when the customer answers the preset question. It may be understood that only video data of the customer corresponding to a sensitive question may be obtained (for example, the sensitive question is "What is your monthly salary?"), or video data corresponding to a non-sensitive question and the sensitive question may be obtained. The video data includes at least one frame of to-be-recognized image.

S20. Perform image recognition on the video data by using a pre-trained occlusion recognition model, where a recognition result includes hand-occluded facial images and hand-unoccluded facial images.

The occlusion recognition model is a classifier pre-obtained by classifying and training a large amount of training image data. It may be understood that the pre-trained training image data includes hand-occluded training images and hand-unoccluded training images, and the hand-occluded training images and the hand-unoccluded training images are trained by using a classification algorithm, to obtain the occlusion recognition model. The hand-occluded training images are images pre-collected for training the occlusion recognition model and in which different facial positions are occluded with a hand. The hand-unoccluded training images are some images pre-collected for training the occlusion recognition model and in which a face is not occluded with a hand.

Specifically, the server inputs the video data into the pre-trained occlusion recognition model, and recognizes each frame of to-be-recognized image in the video data by using the occlusion recognition model, to determine whether the to-be-recognized image is a hand-occluded facial image or a hand-unoccluded facial image, so as to obtain the recognition result including the hand-occluded facial images and the hand-unoccluded facial images. It may be understood that the server processes, for example, binarizes, each frame of to-be-recognized image in the video data, obtains a facial region corresponding to the to-be-recognized image, extracts a histogram of oriented gradient feature corresponding to the facial region, inputs the histogram of oriented gradient feature corresponding to each frame of to-be-recognized image into the pre-trained occlusion recognition model, classifies the histogram of oriented gradient feature by using the occlusion recognition model, and determines a recognition probability value corresponding to each frame of to-be-recognized image. If the recognition probability value is greater than a preset probability value, the to-be-recognized image is a hand-occluded facial image; or if the recognition probability value is less than the preset probability value, the to-be-recognized image is a hand-unoccluded facial image. The recognition probability value is a probability value obtained by recognizing a to-be-recognized image by using the occlusion recognition model, to determine whether the to-be-recognized image is a hand-occluded facial image. Optionally, the preset probability value may be 0.6, and each frame of to-be-recognized image is recognized by using the occlusion recognition model, to distinguish each frame of to-be-recognized image in the video data as a hand-occluded facial image or a hand-unoccluded facial image. This helps subsequently process the hand-occluded facial images and the hand-unoccluded facial images respectively, thereby improving risk recognition efficiency.

S30. Obtain a hand-occluded facial position corresponding to each hand-occluded facial image, and obtain a tension degree recognition result based on hand-occluded facial positions corresponding to all the hand-occluded facial images.

The hand-occluded facial position is a facial position occluded by the customer with a hand. For example, the customer occludes an eye, an ear, the mouth, or the nose of the face with a hand. The tension degree recognition result is a recognition result corresponding to the hand-occluded facial positions corresponding to all the hand-occluded facial images. The tension degree recognition result may be represented by using a value from 0 to 1. A larger value indicates a higher tension degree of the customer; on the contrary, a smaller value indicates a lower tension degree of the customer.

Specifically, after obtaining the to-be-recognized images, the server may recognize, by using the occlusion recognition model, whether the to-be-recognized image is a hand-occluded facial image. When the occlusion recognition model is pre-trained, the face in the occlusion training images is pre-divided into the forehead, the left eye, the right eye, the left cheek, the right cheek, the nose, and the chin, and each position is pre-numbered, for example, the forehead is 1, the left eye is 2, ..., the nose is 6, and the chin is 7. Therefore, hand-occluded facial position numbers (i.e., the hand-occluded facial positions) can also be obtained by using the occlusion recognition model. Each hand-occluded facial image includes at least one hand-occluded facial position. A position number corresponding to each hand-occluded facial image is output by using the occlusion recognition model. Each position number corresponds to one facial position. A database is queried based on the position number to obtain the hand-occluded facial position corresponding to each hand-occluded facial image. Then, the tension degree recognition result is obtained based on all hand-occluded facial positions of each hand-occluded facial image. In this embodiment, the server calculates an occlusion probability of each hand-occluded facial position, inputs a hand-occluded facial image corresponding to the highest occlusion probability into a tension evaluation model, to obtain a tension degree recognition result corresponding to the highest occlusion probability of the hand-occluded facial position. The tension degree recognition result is obtained at relatively high efficiency.

Further, a hand-occluded facial position with the highest occlusion probability is obtained as a key occluded position corresponding to all the hand-occluded facial images, and the tension degree recognition result is determined based on the key occluded position, thereby improving risk recognition efficiency.

S40. Input the hand-unoccluded facial images into a pre-trained security determining model to obtain a risk degree recognition result.

The security determining model is a model pre-trained for recognizing whether a customer presents a risk, and is mainly a security determining model obtained by training image data including a risk and image data including no risk. The risk degree recognition result is a recognition result of the hand-unoccluded facial images that is output by using the security determining model. The tension degree recognition result may be represented by using a value from 0 to 1. A larger value indicates a higher risk degree corresponding to the customer; on the contrary, a smaller value indicates a lower risk degree corresponding to the customer.

Specifically, after obtaining a hand-unoccluded facial image, the server inputs the hand-unoccluded facial image into the pre-trained security determining model, and outputs a risk degree corresponding to the hand-unoccluded facial image by using the security determining model. It may be understood that the server first obtains a key frame image based on all the hand-unoccluded facial images, inputs the key frame image into the pre-trained security determining model, determines intensity corresponding to a facial action unit corresponding to the key frame image by using the security determining model, performs classification based on intensity corresponding to a target facial action unit, outputs a risk probability corresponding to the key frame image, and uses the risk probability as the risk degree recognition result corresponding to all the hand-unoccluded facial images. A larger risk degree recognition result indicates a higher probability that the customer presents a risk. The risk probability is a probability value obtained by recognizing the key frame image by using the security determining model, to determine whether the key frame image is a risky image. It should be noted that the key frame image means that all the hand-unoccluded facial images are clustered based on intensity of a facial action unit (Action Unit, AU) in each frame of hand-unoccluded facial image, some to-be-selected images closest to a cluster center are selected, and intensity of a facial action unit in each of the to-be-selected images is compared with a preset intensity threshold, to select a to-be-selected image whose intensity is greater than the preset intensity threshold from the to-be-selected images as a hand-unoccluded facial image corresponding to a key frame. For example, if a to-be-selected hand-unoccluded facial image corresponding to a certain cluster center is selected and intensity of each facial action unit specified in the to-be-selected hand-unoccluded facial image is greater than the preset intensity threshold, the to-be-selected hand-unoccluded facial image is used as the hand-unoccluded facial image corresponding to the key frame. In this embodiment, the key frame image is input into the pre-trained security determining model to obtain the risk degree recognition result, and the to-be-recognized image is recognized by using the security determining model, so that the obtained risk degree recognition result is more accurate.

S50. Determine a risk warning recognition result based on the tension degree recognition result and the risk degree recognition result, where the video data is risk warning data if the risk warning recognition result is greater than a first preset threshold.

The risk warning recognition result is a recognition result determined based on the tension degree recognition result and the risk degree recognition result. In an implementation, the server may determine the recognition result by comparing a total frame quantity corresponding to the tension degree recognition result with a total frame quantity corresponding to the risk degree recognition result. In another implementation, the server may determine the recognition result by calculating the tension degree recognition result and the risk degree recognition result according to a preconfigured formula.

Specifically, after obtaining the tension degree recognition result and the risk degree recognition result corresponding to the video data, the server obtains the corresponding risk warning recognition result based on the tension degree recognition result and the risk degree recognition result. It may be understood that the tension degree recognition result may be used as the risk warning recognition result; or the risk degree recognition result may be as the risk warning recognition result; or weights may be configured for the tension degree recognition result and the risk degree recognition result, and weighting calculation may be performed on the tension degree recognition result and the risk degree recognition result to obtain the risk warning recognition result. In this embodiment, the server compares the risk warning recognition result with the first preset threshold. The video data is risk warning data if the risk warning recognition result is greater than the first preset threshold, or the video data is not risk warning data if the risk warning recognition result is not greater than the first preset threshold. For example, if the first preset threshold is 0.6, a risk warning recognition result corresponding to certain video data is 0.7, and the risk warning recognition result is compared with the preset threshold to learn that the risk warning recognition result 0.7 is greater than the first preset threshold 0.6, the video data is risk warning data.

In steps S10 to S50, the video data recorded when the customer answers the preset question is obtained, to help subsequently perform risk recognition based on the video data. Image recognition is performed on the video data by using the pre-trained occlusion recognition model, to distinguish the to-be-recognized image as a hand-occluded facial image or a hand-unoccluded facial image, so as to classify the to-be-recognized image. This helps subsequently perform respective processing based on a classification result, thereby improving risk recognition accuracy. Then, the hand-occluded facial position corresponding to each hand-occluded facial image is obtained, and the tension degree recognition result is rapidly obtained based on the hand-occluded facial positions corresponding to all the hand-occluded facial images, to implement risk recognition based on the hand-occluded facial images. In addition, the hand-unoccluded facial images are input into the pre-trained security determining model to rapidly obtain the risk degree recognition result, where the obtaining process is simple and convenient, to implement risk recognition based on the hand-unoccluded facial images. Finally, the risk warning recognition result is determined based on the tension degree recognition result and the risk degree recognition result, where the video data is risk warning data if the risk warning recognition result is greater than the first preset threshold, to implement risk recognition on the video data. Risk recognition is respectively performed on the hand-occluded facial images and the hand-unoccluded facial images in the video data to improve risk recognition accuracy.

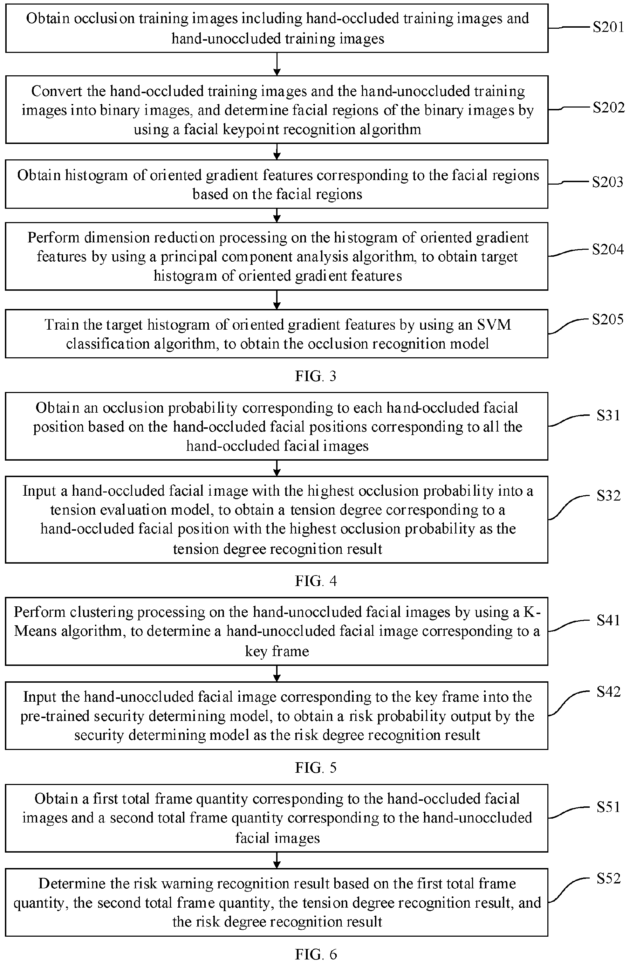

In an embodiment, as shown in FIG. 3, before step S20, that is, before the step of performing image recognition on the video data by using a pre-trained occlusion recognition model, the facial image-based risk recognition method further includes the following steps.

S201. Obtain occlusion training images including hand-occluded training images and hand-unoccluded training images.

The occlusion training images are training images used for training the occlusion recognition model, and include the hand-occluded training images and the hand-unoccluded training images.

Specifically, about 720,000 images including hand-occluded training images and hand-unoccluded training images are pre-collected as the occlusion training images. Attributes of the hand-occluded training images and the hand-unoccluded training images are labeled, and a number of a hand-occluded facial position in each hand-occluded training image is labeled, to obtain the occlusion training images. It may be understood that facial positions are pre-obtained through division and pre-numbered. For example, the face is divided into the forehead, the left eye, the right eye, the left cheek, the right cheek, the nose, and the chin, and the number of the occluded position in each hand-occluded training image in the occlusion training images is labeled based on the facial positions obtained through division.

S202. Convert the hand-occluded training images and the hand-unoccluded training images into binary images, and determine facial regions of the binary images by using a facial keypoint recognition algorithm.

The binary image (obtained through image binarization) is an image in which a grayscale value of a pixel is set to 0 or 255. The hand-occluded training images and the hand-unoccluded training images are converted into the binary images, so that data amounts of the hand-occluded training images and the hand-unoccluded training images can be reduced, to highlight contours of the hand-occluded training images and the hand-unoccluded training images.

Specifically, the hand-occluded training images and the hand-unoccluded training images in the occlusion training images are converted into the binary images, and a facial region corresponding to each binary image is determined by using the facial keypoint recognition algorithm. The facial keypoint recognition algorithm may include but is not limited to CLNF algorithm + LNF algorithm. In a patch model of a combination of a CLNF (Constrained Local Neural Field, constrained local neural field) model and an LNF (local neural field, local neural field), during fitting, an originally used uniform regularized landmark mean shift (regularized landmark mean shift, RLMS) method is changed to a non-uniform regularized landmark mean shift method for facial fitting. The fitting is faster and more accurate, so that more accurate facial regions can be obtained. Obtaining the facial regions of the binary images by using CLNF algorithm + LNF algorithm belongs to the prior art, and therefore is not described herein in detail.

S203. Obtain histogram of oriented gradient features corresponding to the facial regions based on the facial regions.

The histogram of oriented gradient (Histogram of Oriented Gradient, HOG) feature is a feature descriptor used in computer vision and image processing for object detection, and means that a histogram of oriented gradient in a local area is calculated to constitute a human body feature, to well describe a human body edge. With the HOG feature, both boundary information of a human body target contour and internal information of the human body contour can be extracted.

Specifically, the obtaining histogram of oriented gradient features corresponding to the facial regions includes the following steps: (1) Preprocess images of the facial regions to obtain preprocessed images. For example, gamma correction is performed on the facial regions, so that overall brightness of the facial regions is increased or decreased, to provide technical support for subsequent extraction of the histogram of oriented gradient features (HOG features). (2) Divide the facial regions into a plurality of cells. For example, $n \times n$ pixels are one cell; adjacent cells may constitute a large block (block), for example, $h \times h$ cells constitute one block; and blocks may or may not overlap with each other. For example, in a 216*304 facial region, if one cell is 8*8 pixels, the 216*304 facial region may be divided into 27*38 cells; and if 2*2 cells constitute one block, there may be 14*19 blocks.

(3) Perform gradient calculation on the preprocessed images, to obtain a gradient direction and a gradient amplitude of each pixel. Specifically, the gradient amplitude is obtained by using a formula

$$G(x.y) = \left[ G_x(x,y)^2 + G_y(x,y)^2 \right]^{\frac{1}{2}}$$

, where (x, y) is a pixel, and $G(x,y)$ is a gradient amplitude of the pixel. First, gradient amplitudes of the pixel in a horizontal direction and a vertical direction are calculated by using formulas $G_x(x,y) = I(x+1,y)-I(x-1,y)$ and $G_y(x,y) = I(x,y+1)-I(x,y-1)$, where $G_x(x,y)$ is a gradient amplitude of the pixel in the horizontal direction, and $G_y(x,y)$ is a gradient amplitude of the pixel in the vertical direction. Then, the gradient direction of each pixel is calculated by using a formula

$$\theta\ (x,y) = \arctan\left( \frac{I(x,y+1) - I(x,y-1)}{I(x+1,y) - I(x-1,y)} \right),$$

where $\theta(x,y)$ is the gradient direction. (4) Divide a gradient direction range of pixels in each cell into a plurality of specified directions, and calculate a specified amplitude corresponding to each specified direction based on gradient amplitudes and gradient directions of the pixels. (5) Calculate all the specified directions and corresponding specified amplitudes of each cell to form a feature vector of the cell. (6) Combine a plurality of adjacent cells into one block, and connect feature vectors of all the cells in the block in series to form a feature vector of the block. (7) Connect feature vectors of all blocks in the facial regions in series, to obtain feature vectors of the facial regions, that is, obtain the histogram of oriented gradient features corresponding to the facial regions.

S204. Perform dimension reduction processing on the histogram of oriented gradient features by using a principal component analysis algorithm, to obtain target histogram of oriented gradient features.

The principal component analysis (Principal Component Analysis, PCA) algorithm is the most commonly used linear dimension reduction method. The PCA algorithm aims to map high-dimensional data to low-dimensional space for representation through a certain type of linear projection, and expects the maximum variance of the data in a projected dimension, to use fewer data dimensions while retaining features of more original data points.

Specifically, the performing dimension reduction processing on the histogram of oriented gradient features by using a principal component analysis algorithm, to obtain target histogram of oriented gradient features includes the following steps: (1) Construct an original matrix X based on the histogram of oriented gradient features, where $X_i = \{X_1, X_2, ...,X_n\}$, $i = 1,2.....n$, $X_1$ is the first feature point matrix (a vector including pixel grayscale values in a histogram of oriented gradient is used as one feature point matrix), $X_2$ is the second feature point matrix, $X_n$ is the $n^{th}$ feature point matrix, and n is a total quantity of feature points. (2) Obtain a covariance matrix C by using a formula

$$C = \frac{1}{n} \sum_{i=1}^{n} \left( X_i - \overline{X} \right)\left( X_i - \overline{X} \right)^T$$

, and then perform feature decomposition on the covariance matrix C to obtain feature matrices $A_i$ and $B_i$ corresponding to the covariance matrix C, where C is the covariance matrix (which can be obtained based on the original matrix and an average of feature point matrices), $\overline{X}$ is the average of the feature point matrices (an average matrix corre-

$$\overline{X} = \frac{1}{n} \sum_{i=1}^{n} X_i$$

sponding to the original matrix), and .

(3) Arrange the feature matrices $A_i$ and $B_i$ in descending order based on feature values, and obtain the first 10-dimensional vectors of the feature matrices $A_i$ and $B_i$ as the target histogram of oriented gradient features.

S205. Train the target histogram of oriented gradient features by using an SVM classification algorithm, to obtain the occlusion recognition model.

An SVM (support vector machine, Support Vector Machine) is a common recognition method. The SVM is a supervised learning model commonly used for pattern recognition, classification, and regression analysis in the machine learning field.

Specifically, the target histogram of oriented gradient features are trained by using the SVM classification algorithm, to obtain the occlusion recognition model. It may be understood that a kernel function of the support vector machine classifier and a penalty parameter of the support vector machine classifier are obtained. The target histogram of oriented gradient features are feature vectors. A Lagrange multiplier $a_i^*$ and a decision threshold $b$ are solved by using the following formula:

$$\min\left( \frac{1}{2} \sum_{i=1}^{l} \sum_{j=1}^{i} y_i y_j K\left( x_i, x_j \right) a_i a_j - \sum_{j=1}^{l} a_i \right), s.t.$$

$$\sum_{j=1}^{l} y_i a_i = 0 \qquad b = y_i = \sum_{j=1}^{l} y_i a_i * K\left( x_i, x_j \right),$$

and $1 \leq a_i \leq c(i = 1,...,l)$, where s.t. is an abbreviation of a constraint condition in a mathematical formula, min is the minimum value substituting for the mathematical for-

$$\left( \frac{1}{2} \sum_{i=1}^{l} \sum_{j=1}^{i} y_i y_j K\left( x_i, x_j \right) a_i a_j - \sum_{j=1}^{l} a_i \right)$$

mula in the constraint condition, $K(x_i, y_j)$ is the kernel function of the support vector machine classifier, C is the penalty parameter of the support vector machine classifier, C>0, $a_i$ is in a conjugate relationship with the Lagrange multiplier

$a_i^*$ , $x_i$ is a feature vector of an occlusion training image, $l$ is a quantity of feature vectors (corresponding to the target histogram of oriented gradient features) of the occlusion training image, and $y_i$ is a label of the occlusion training image. The kernel function is the kernel function of the support vector machine classifier, and is used to perform a kernel function operation on a feature vector of a training sample input during training of the support vector machine classifier. The kernel function of the support vector machine classifier includes but is not limited to a linear kernel function, a polynomial kernel function, a Gaussian kernel function, and a radial basis kernel function. Because the support vector machine classifier in this embodiment is linearly separable, preferably, the linear kernel function is used as the kernel function of the support vector machine classifier in this embodiment, and $K(x_i, x_j) = (x_i, x_j)$, where $y_i$ is the label of the occlusion training image. Due to a binary classification problem of the support vector machine classifier, $y_i$ may be 1 or -1. If the hand-occluded training image is a positive sample, $y_i=1$; or if the hand-unoccluded training image is a negative sample, $y_i=-1$. The penalty parameter C is a parameter used for optimizing the support vector machine classifier, and is a determined value. It may be understood that after a proper kernel function is used, a proper penalty parameter is set, and a formula is used to perform a kernel function operation on the feature vector of the occlusion training image and the kernel function, an optimization problem is resolved, that is, a value of the Lagrange multiplier $a_i^*$ is obtained, so that a result

$$\left(\frac{1}{2}\sum_{i=1}^{l}\sum_{j=1}^{i} y_i y_j K(x_i, x_j) a_i a_j - \sum_{j=1}^{l} a_i\right)$$

of the kernel function operation is minimized, to obtain $a_i^* = (a_1^*, a_2^* ... a_l^*)$. Then, components $a_1^*, a_2^* ... a_l^*$ of $a_i^*$ in an open interval (0, C) are determined. A value of b is calculated according to

$$b = y_i = \sum_{j=1}^{l} y_i a_i * K(x_i, x_j)$$

, a critical surface g(x) of the support vector machine classifier is obtained based on the Lagrange multiplier $a_i^*$ and the decision threshold

$$g(x) = \sum_{i=1}^{l} y a_i^* K(x_i, y_i) + b$$

b by using , and the occlusion training images are classified based on the critical surface to obtain the occlusion recognition model without repeatedly training the model, thereby improving model training efficiency. The critical surface is a classification surface that can correctly separate a positive sample from a negative sample and make the distance between the two types of samples maximum.

In this embodiment, when the target histogram of oriented gradient features are trained by using the SVM classification algorithm, the hand-occluded facial positions in the hand-occluded facial images are also trained. Different positions correspond to different position numbers. Hand-occluded facial images belonging to the same occluded facial position are classified. If the classification is incorrect, the images may be retrained, so that it can be subsequently determined, by using the occlusion recognition model, whether the to-be-recognized image is an image in which a facial position is occluded with a hand, a number of the hand-occluded facial position can be obtained, and the hand-occluded facial position can be obtained based on a relationship between the position number and the hand-occluded facial position.

In steps S201 to S205, the occlusion training images are obtained, to help subsequently train the occlusion training images to obtain the occlusion recognition model. The hand-occluded training images and the hand-unoccluded training images are converted into the binary images, and the facial regions of the binary images are determined by using the facial keypoint recognition algorithm, to obtain facial keypoints to provide technical support for subsequent model training. The histogram of oriented gradient features corresponding to the facial regions are obtained based on the facial regions, to extract facial features. Dimension reduction processing is performed on the histogram of oriented gradient features by using the principal component analysis algorithm, to obtain the target histogram of oriented gradient features, so as to implement dimension reduction processing to retain more original image features by using fewer data dimensions, to help train the occlusion recognition model. The target histogram of oriented gradient features are trained by using the SVM classification algorithm, to obtain the occlusion recognition model, to help subsequently determine, by using the occlusion recognition model, whether the to-be-recognized image is a hand-occluded facial image. The facial regions can be more accurately obtained by using CLNF algorithm + LNF algorithm, edges of the facial regions are described by using the histogram of oriented gradient features, dimension reduction processing is performed on the histogram of oriented gradient features to greatly reduce a processing amount of subsequent training, and the dimension-reduced target histogram of oriented gradient features are trained by using the SVM classification algorithm to obtain the occlusion recognition model, thereby improving subsequent recognition efficiency.

In an embodiment, as shown in FIG. 4, step S30, that is, the obtaining a tension degree recognition result based on hand-occluded facial positions corresponding to all the hand-occluded facial images specifically includes the following steps.

S31. Obtain an occlusion probability corresponding to each hand-occluded facial position based on the hand-occluded facial positions corresponding to all the hand-occluded facial images.

The occlusion probability is a probability corresponding to a hand-occluded facial position. Specifically, the server obtains each hand-occluded facial image from the video data by using the occlusion recognition model. Each hand-occluded facial image includes at least one hand-occluded facial position. The hand-occluded facial position corresponding to each hand-occluded facial image is obtained based on the hand-occluded facial image, and the occlusion probability corresponding to the hand-occluded facial position in each hand-occluded facial image is obtained based on the hand-occluded facial position corresponding to the hand-occluded facial image by using a probability formula. The probability formula is 

$$y = \frac{x}{a}$$

, where y is the occlusion probability corresponding to the hand-occluded facial position, $x$ is a frame quantity corresponding to each hand-occluded facial position, and $a$ is a frame quantity of the hand-occluded facial images in the video data. For example, the video data includes 20 frames of hand-occluded facial images, where the facial forehead is occluded with a hand in 10 frames, the facial nose is occluded with a hand in 5 frames, and the facial chin is occluded with a hand in 5 frames, and occlusion probabilities corresponding to the hand-occluded facial positions are calculated as 50%, 25%, and 25% respectively by using the probability formula. Further, if the hand-occluded facial image corresponds to a plurality of hand-occluded facial positions, hand-occluded facial positions in each hand-occluded facial image are determined, and an occlusion probability corresponding to the hand-occluded facial positions in each hand-occluded facial image is obtained by using the probability formula. For example, the video data includes 20 frames of hand-occluded facial images, where the facial forehead and right eye are occluded with a hand in 10 frames, the facial nose and chin are occluded with a hand in 5 frames, and the facial chin is occluded with a hand in 5 frames, an occlusion probability of the hand-occluded facial forehead and right eye, an occlusion probability of the hand-occluded facial nose and chin, and an occlusion probability of the hand-occluded facial chin are calculated as 50%, 25%, and 25% respectively by using the probability formula.

S32. Input a hand-occluded facial image with the highest occlusion probability into a tension evaluation model, to obtain a tension degree corresponding to a hand-occluded facial position with the highest occlusion probability as the tension degree recognition result.

The tension evaluation model is a comparison criterion obtained through pre-training, and different hand-occluded facial positions correspond to different tension degrees. In this embodiment, the server pre-obtains different tension degrees of tension image data including hand-occluded facial positions, labels each piece of tension image data with a corresponding tension degree, and trains the tension image data by using a classification algorithm, such as an SVM algorithm or a K-Means algorithm, to obtain the trained tension evaluation model. It should be noted that the trained tension image data includes at least one hand-occluded facial position, that is, images in which different facial positions are occluded with a hand or a plurality of facial positions are simultaneously occluded with a hand are used as the tension image data, so that an image in which one facial position is occluded with a hand or an image in which a plurality of facial positions are occluded with a hand can be subsequently recognized by using the tension evaluation model, to obtain a tension degree.

Specifically, the server inputs the hand-occluded facial position with the highest occlusion probability into the trained tension evaluation model to obtain the tension degree recognition result. The tension degree may be a value from 0 to 1, and a larger value indicates a higher tension degree of the customer. Further, the hand-occluded facial image corresponding to the hand-occluded facial position corresponding to the highest occlusion probability is selected based on the occlusion probability corresponding to each hand-occluded facial position, and is input into the tension evaluation model to obtain the tension degree corresponding to the hand-occluded facial position. If the hand-occluded facial position corresponding to the highest occlusion probability corresponds to a plurality of hand-occluded facial images, one of the hand-occluded facial images including the hand-occluded facial position may be randomly selected. For example, if an occlusion probability of the hand-occluded facial forehead is 0.5, an occlusion probability of the hand-occluded facial nose is 0.25, and an occlusion probability of the hand-occluded facial chin is 0.25, any hand-occluded facial image including the hand-occluded facial forehand and corresponding to the highest occlusion probability is selected and input into the tension evaluation model. If a tension degree corresponding to the hand-occluded facial image including the hand-occluded facial forehand is obtained as 0.7 by using the tension evaluation model, when the facial forehead is occluded with a hand, it indicates that the customer is relatively tense, and 0.7 is used as the tension degree recognition result. For another example, if an occlusion probability of the hand-occluded facial forehead and right eye is 0.5, an occlusion probability of the hand-occluded facial nose and chin is 0.25, and an occlusion probability of the hand-occluded facial chin is 0.25, a hand-occluded facial image including the hand-occluded facial forehand and right eye and corresponding to the highest occlusion probability is selected and input into the tension evaluation model. If a tension degree corresponding to the hand-occluded facial image including the hand-occluded facial forehand and right eye is recognized as 0.8 by using the tension evaluation model, when the facial forehead and right eye are occluded with a hand, it indicates that the customer is very tense, and 0.8 is used as the tension degree recognition result.

In steps S31 and S32, the occlusion probability corresponding to each hand-occluded facial position is obtained based on the hand-occluded facial positions corresponding to all the hand-occluded facial images, to determine one facial position or several facial positions occluded by the customer with a hand in the video data at a higher probability. The hand-occluded facial image with the highest occlusion probability is input into the tension evaluation model, to obtain the tension degree corresponding to the hand-occluded facial image with the highest occlusion probability as the tension degree recognition result, so as to use the tension degree corresponding to the highest occlusion probability that the customer occludes the facial position with a hand as the tension degree recognition result, to avoid accidental facial occlusion with a hand of the customer.

In an embodiment, as shown in FIG. 5, in step S40, the inputting the hand-unoccluded facial images into a pre-trained security determining model to obtain a risk degree recognition result specifically includes the following steps.

S41. Perform clustering processing on the hand-unoccluded facial images by using a K-Means algorithm, to determine a hand-unoccluded facial image corresponding to a key frame.

Specifically, because the customer may answer more than one question during the face-to-face loan review, video data corresponding to a sensitive question is obtained, and microexpression analysis is performed on hand-unoccluded facial images in the video data to obtain a risk degree recognition result. An microexpression is a very fast expression lasting for only 1/25 to 1/5s, and is a short-lived uncontrollable facial expression appearing when people try to suppress or hide their true emotions. In video data in which a customer answers a sensitive question, the customer is usually expressionless or shows some other common expressions, and useful information usually appears only in microexpressions that may flash by. In this case, clustering processing is performed on all hand-unoccluded facial images by using the K-Means algorithm, to obtain a hand-unoccluded facial image corresponding to a key frame in the hand-unoccluded facial images, to improve risk recognition accuracy.

Specifically, the performing clustering processing on all hand-unoccluded facial images by using the K-Means algorithm, to obtain a hand-unoccluded facial image corresponding to a key frame in the hand-unoccluded facial images may specifically include the following steps: (1) If the hand-unoccluded facial images have a total of n data objects and a cluster quantity is k, randomly select k objects from the n data objects as initial cluster centers. (2) Calculate distances of each data object from the centers, and classify the data objects based on a minimum distance criterion. (3) Based on an average (a center object) of all objects in each cluster, calculate distances of each object in a sample set from center objects, and classify the data objects again as in step (2). (4) Repeat step (2) and step (3) until a cluster center change is less than a certain given threshold, stop the operation, obtain a clustering result including a cluster quantity and a cluster center, and use a hand-unoccluded facial image of the cluster center as the hand-unoccluded facial image corresponding to the key frame.

Further, all the hand-unoccluded facial images are classified based on intensity of a facial action unit (action unit) in each frame of hand-unoccluded facial image by using the K-Means clustering algorithm. Specifically, one microexpression includes a series of facial action units, a facial action unit number mapping table is established, and each action unit is represented by using one pre-specified number. For example, a surprised expression includes inner eyebrow raising, outer eyebrow raising, upper eyelid raising, and lower jaw opening, and it can be learned, according to the action unit number mapping table, that action unit numbers corresponding to these actions are 1, 2, 5, and 26, respectively. All the hand-unoccluded facial images in the video are clustered based on the action unit in each frame of hand-unoccluded facial image, some images closest to a certain quantity of cluster centers are selected (for example, four images are selected if there are four cluster centers: inner eyebrow raising, outer eyebrow raising, upper eyelid raising, and lower jaw opening), and the hand-unoccluded facial image corresponding to the key frame is selected based on a preset action unit intensity threshold pre-obtained based on a statistical result. It may be understood that, if intensity of each facial action unit specified in a frame of hand-unoccluded facial image is greater than the preset intensity threshold, the hand-unoccluded facial image is used as the hand-unoccluded facial image corresponding to the key frame.

S42. Input the hand-unoccluded facial image corresponding to the key frame into the pre-trained security determining model, to obtain a risk probability output by the security determining model as the risk degree recognition result.

Specifically, the server inputs the hand-unoccluded facial image corresponding to the key frame into the pre-trained security determining model, and performs microexpression recognition on the hand-unoccluded facial image by using the security determining model, to obtain the risk probability corresponding to the hand-unoccluded facial image as the risk degree recognition result. A higher risk probability indicates that the customer corresponds to a higher risk degree.

In steps S41 and S42, clustering processing is performed on the hand-unoccluded facial images by using the K-Means algorithm, to determine the hand-unoccluded facial image corresponding to the key frame, so as to implement clustering processing on the hand-unoccluded facial images, so that an image recognized by using the security determining model is the hand-unoccluded facial image corresponding to the key frame, thereby improving risk recognition accuracy and increasing a risk recognition speed. The hand-unoccluded facial image corresponding to the key frame is input into the pre-trained security determining model, to obtain the risk probability output by the security determining model as the risk degree recognition result, so as to implement risk recognition and improve risk recognition processing efficiency.

In an embodiment, as shown in FIG. 6, step S50, that is, the determining a risk warning recognition result based on the tension degree recognition result and the risk degree recognition result specifically includes the following steps.

S51. Obtain a first total frame quantity corresponding to the hand-occluded facial images and a second total frame quantity corresponding to the hand-unoccluded facial images.

Specifically, the video data includes at least one frame of to-be-recognized image. The to-be-recognized image is distinguished as a hand-occluded facial image or a hand-unoccluded facial image by using the occlusion recognition model, and the first total frame quantity corresponding to the hand-occluded facial images and the second total frame quantity corresponding to the hand-unoccluded facial images in the video data are counted, to help subsequently determine the risk warning recognition result based on the first total frame quantity and the second total frame quantity.

S52. Determine the risk warning recognition result based on the first total frame quantity, the second total frame quantity, the tension degree recognition result, and the risk degree recognition result.

Specifically, the risk warning recognition result is obtained based on the tension degree recognition result corresponding to the hand-occluded facial images in the video data, the risk degree recognition result corresponding to the hand-unoccluded facial images in the video data, the first total frame quantity corresponding to the hand-occluded facial images, and the second total frame quantity corresponding to the hand-unoccluded facial images. It may be understood that the first total frame quantity and the second total frame quantity may be compared, and a recognition result corresponding to the larger total frame quantity may be used as the risk warning recognition result; or corresponding weights may be preconfigured for the tension degree recognition result and the risk degree recognition result, weighting calculation may be performed, and a result obtained after the weighting calculation may be used as the risk warning recognition result.

In steps S51 and S52, the first total frame quantity corresponding to the hand-occluded facial images and the second total frame quantity corresponding to the hand-unoccluded facial images are obtained, to provide technical support for subsequent determining of the risk warning recognition result. The risk warning recognition result is determined based on the first total frame quantity, the second total frame quantity, the tension degree recognition result, and the risk degree recognition result, to determine the risk warning recognition result based on the hand-occluded facial images and the hand-unoccluded facial images, thereby improving risk recognition efficiency and avoiding inaccurate risk recognition caused when the face is occluded with a hand.

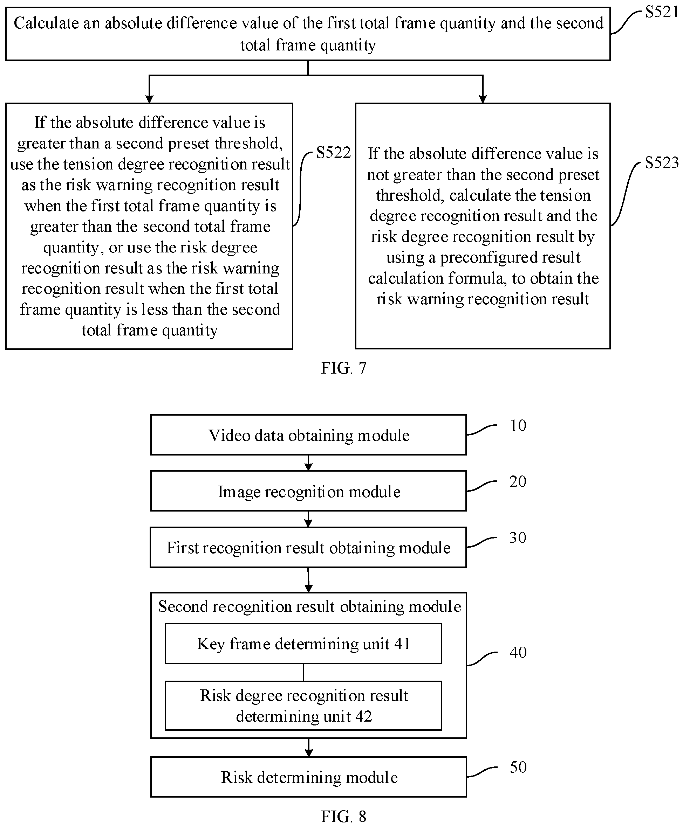

In an embodiment, as shown in FIG. 7, step S52, that is, the determining the risk warning recognition result based on the first total frame quantity, the second total frame quantity, the tension degree recognition result, and the risk degree recognition result specifically includes the following steps.

S521. Calculate an absolute difference value of the first total frame quantity and the second total frame quantity.

Specifically, the difference between the first total frame quantity and the second total frame quantity is calculated based on the first total frame quantity and the second total frame quantity, and an absolute value is taken as the absolute difference value. For example, if the video data includes 100 frames of to-be-recognized images, the first total frame quantity is 20, and the second total frame quantity is 80, the absolute difference value of the first total frame quantity and the second total frame quantity is 60.

S522. If the absolute difference value is greater than a second preset threshold, use the tension degree recognition result as the risk warning recognition result when the first total frame quantity is greater than the second total frame quantity, or use the risk degree recognition result as the risk warning recognition result when the first total frame quantity is less than the second total frame quantity.

Specifically, the server presets the second preset threshold, compares the absolute difference value with the second preset threshold, and uses the tension degree recognition result corresponding to the first total frame quantity as the risk warning recognition result if the absolute difference value is greater than the second preset threshold and the first total frame quantity is greater than the second total frame quantity; or uses the risk degree recognition result corresponding to the second total frame quantity as the risk warning recognition result if the absolute difference value is greater than the second preset threshold and the first total frame quantity is less than the second total frame quantity. For example, if the absolute difference value 60 is greater than the second preset threshold 50 and the first total frame quantity 20 is less than the second total frame number 80, the risk degree recognition result corresponding to the 80 frames is used as the risk warning recognition result. On the contrary, if the absolute difference value 60 is greater than the second preset threshold 50 and the first total frame quantity 80 is greater than the second total frame number 20, the tension degree recognition result corresponding to the 80 frames is used as the risk warning recognition result.

S523. If the absolute difference value is not greater than the second preset threshold, calculate the tension degree recognition result and the risk degree recognition result by using a preconfigured result calculation formula, to obtain the risk warning recognition result.

Specifically, the server presets the second preset threshold, compares the absolute difference value with the second preset threshold, and if the absolute difference value is not greater than the second preset threshold, obtains the preconfigured result calculation formula to calculate the tension degree recognition result and the risk degree recognition result, to obtain the risk warning recognition result. The result calculation formula is a weighting formula. Weights are preconfigured for the tension degree recognition result and the risk degree recognition result, and weighting calculation is performed based on the tension degree recognition result, a weight corresponding to the tension degree recognition result, the risk degree recognition result, and a weight corresponding to the risk degree recognition result to obtain the risk warning recognition result. For example, if the tension degree recognition result is 0.3, the weight corresponding to the tension degree recognition result is 0.6, the risk degree recognition result is 0.5, and the weight corresponding to the risk degree recognition result is 0.4, the risk warning recognition result is 0.38. It may be subsequently determined, based on the risk warning recognition result, whether the video data is risk warning data. It may be understood that the first preset threshold is preset, and the risk warning recognition result is compared with the first preset threshold, where the video data is not risk warning data if the risk warning recognition result 0.38 is less than the first preset threshold 0.5.

In steps S521 to S523, the absolute difference value of the first total frame quantity and the total frame quantity is calculated, to help determine the risk warning recognition result based on the absolute difference value. If the absolute difference value is greater than the second preset threshold, the tension degree recognition result is used as the risk warning recognition result when the first total frame quantity is greater than the second total frame quantity, or the risk degree recognition result is used as the risk warning recognition result when the first total frame quantity is less than the second total frame quantity, to determine the risk warning recognition result, thereby avoiding an inaccurate risk warning recognition result caused due to occlusion with a hand of the customer. If the absolute difference value is not greater than the second preset threshold, the tension degree recognition result and the risk degree recognition result are calculated by using the preconfigured result calculation formula, to determine the risk warning recognition result based on the recognition results corresponding to the hand-occluded facial images and the hand-unoccluded facial images, thereby improving risk recognition accuracy. It may be understood that, when the absolute difference value is greater than the second preset threshold, it indicates that the face is occluded by accident in the video data, or the face is occluded in most frames. When the face is occluded by accident, the risk degree recognition result corresponding to the hand-unoccluded facial images is directly used as the risk warning recognition result to avoid accidental facial occlusion; or when the face is occluded with a hand in most frames, the tension degree recognition result corresponding to the hand-occluded facial images is used as the risk warning recognition result. When the absolute difference value is not greater than the second preset threshold, it indicates that there is a small difference between a quantity of frames in which the face is occluded with a hand of the customer and a quantity of frames in which the face is unoccluded with a hand of the customer in the video data. In this case, weighting calculation is performed based on the tension degree recognition result corresponding to the hand-occluded facial images and the risk degree recognition result corresponding to the hand-unoccluded facial images, so that the obtained risk warning recognition result is more accurate.

It should be understood that the sequence numbers of the steps in the above embodiments do not mean an execution sequence, and an execution sequence of each process should be determined based on a function and internal logic of the process, and should not constitute any limitation on the implementation process of the embodiments of this application.

In an embodiment, a facial image-based risk recognition apparatus is provided, and the facial image-based risk recognition apparatus corresponds to the facial image-based risk recognition method in the above embodiments. As shown in FIG. 8, the facial image-based risk recognition apparatus includes a video data obtaining module 10, an image recognition module 20, a first recognition result obtaining module 30, a second recognition result obtaining module 40, and a risk determining module 50. The functional modules are described in detail as follows:

The video data obtaining module 10 is configured to obtain video data recorded when a customer answers a preset question.

The image recognition module 20 is configured to perform image recognition on the video data by using a pre-trained occlusion recognition model, where a recognition result includes hand-occluded facial images and hand-unoccluded facial images.

The first recognition result obtaining module 30 is configured to obtain a hand-occluded facial position corresponding to each hand-occluded facial image, and obtain a tension degree recognition result based on hand-occluded facial positions corresponding to all the hand-occluded facial images.

The second recognition result obtaining module 40 is configured to input the hand-unoccluded facial images into a pre-trained security determining model

to obtain a risk degree recognition result.

The risk determining module 50 is configured to determine a risk warning recognition result based on the tension degree recognition result and the risk degree recognition result, where the video data is risk warning data if the risk warning recognition result is greater than a first preset threshold.

In an embodiment, before the image recognition module 20, the facial image-based risk recognition apparatus further includes a training data obtaining unit, a facial region obtaining unit, a histogram of oriented gradient feature obtaining unit, a target histogram of oriented gradient feature obtaining unit, and an occlusion recognition model obtaining unit.

The training data obtaining unit is configured to obtain occlusion training images including hand-occluded training images and hand-unoccluded training images.

The facial region obtaining unit is configured to convert the hand-occluded training images and the hand-unoccluded training images into binary images, and determine facial regions of the binary images by using a facial keypoint recognition algorithm.

The histogram of oriented gradient feature obtaining unit is configured to obtain histogram of oriented gradient features corresponding to the facial regions based on the facial regions.

The target histogram of oriented gradient feature obtaining unit is configured to perform dimension reduction processing on the histogram of oriented gradient features by using a principal component analysis algorithm, to obtain target histogram of oriented gradient features.

The occlusion recognition model obtaining unit is configured to train the target histogram of oriented gradient features by using an SVM classification algorithm, to obtain the occlusion recognition model.

In an embodiment, the first recognition result obtaining module 30 includes an occlusion probability obtaining unit and a tension degree recognition result obtaining unit.

The occlusion probability obtaining unit is configured to obtain an occlusion probability corresponding to each hand-occluded facial position based on the hand-occluded facial positions corresponding to all the hand-occluded facial images.

The tension degree recognition result obtaining unit is configured to input a hand-occluded facial image corresponding to the highest occlusion probability into a tension evaluation model, to obtain a tension degree corresponding to the hand-occluded facial image with the highest occlusion probability as the tension degree recognition result.

In an embodiment, the second recognition result obtaining module 40 includes a key frame determining unit 41 and a risk degree recognition result determining unit 42.

The key frame determining unit 41 is configured to perform clustering processing on the hand-unoccluded facial images by using a K-Means algorithm, to determine a hand-unoccluded facial image corresponding to a key frame.

The risk degree recognition result determining unit 42 is configured to input the hand-unoccluded facial image corresponding to the key frame into the pre-trained security determining model, to obtain a risk probability output by the security determining model as the risk degree recognition result.

In an embodiment, the risk determining module 50 includes a total frame quantity determining unit and a recognition unit.

The total frame quantity determining unit is configured to obtain a first total frame quantity corresponding to the hand-occluded facial images and a second total frame quantity corresponding to the hand-unoccluded facial images.

The recognition unit is configured to determine the risk warning recognition result based on the first total frame quantity, the second total frame quantity, the tension degree recognition result, and the risk degree recognition result.

In an embodiment, the recognition unit includes an absolute difference value calculation subunit, a first determining subunit, and a second determining subunit.

The absolute difference value calculation subunit is configured to calculate an absolute difference value of the first total frame quantity and the second total frame quantity.

The first determining subunit is configured to: if the absolute difference value is greater than a second preset threshold, use the tension degree recognition result as the risk warning recognition result when the first total frame quantity is greater than the second total frame quantity, or use the risk degree recognition result as the risk warning recognition result when the first total frame quantity is less than the second total frame quantity.

The second determining subunit is configured to: if the absolute difference value is not greater than the second preset threshold, calculate the tension degree recognition result and the risk degree recognition result by using a preconfigured result calculation formula, to obtain the risk warning recognition result.

For specific definitions of the facial image-based risk recognition apparatus, refer to the above definitions of the facial image-based risk recognition method. Details are not described herein again. All or some of the modules in the facial image-based risk recognition apparatus may be implemented by using software, hardware, or a combination thereof. The modules may be embedded in or independent of a processor in a computer device in a form of hardware, or may be stored in a memory in the computer device in a form of software, to be invoked by the processor to perform operations corresponding to the modules.

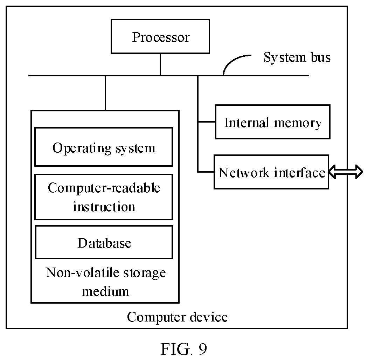

In an embodiment, a computer device is provided. The computer device may be a server, and an internal structure thereof may be shown in FIG. 9. The computer device includes a processor, a memory, a network interface, and a database that are connected via a system bus. The processor in the computer device is configured to provide computing and control capabilities. The memory in the computer device includes a nonvolatile storage medium and an internal memory. The nonvolatile storage medium stores an operating system, computer-readable instructions, and the database. The internal memory provides an environment for operation of the operating system and the computer-readable instructions in the nonvolatile storage medium. The database in the computer device is used to store a correspondence between hand-occluded facial positions and position numbers, etc. The network interface in the computer device is configured to communicate with an external terminal through a network connection. A facial image-based risk recognition method is implemented when the computer-readable instructions are executed by the processor.

In an embodiment, a computer device is provided, including a memory, a processor, and computer-readable instructions stored in the memory and executable on the processor. The processor implements the steps of the facial image-based risk recognition method in the above embodiments, such as step S10 to step S50 shown in FIG. 2, when executing the computer-readable instructions. Alternatively, the processor implements the functions of the modules/units in the facial image-based risk recognition apparatus in the above embodiment, such as the functions of the module 10 to the module 50 shown in FIG. 8, when executing the computer-readable instructions. To avoid repetition, details are not described herein again.

In an embodiment, one or more readable storage media storing computer-readable instructions are provided, where the computer-readable storage media store the computer-readable instructions. When the computer-readable instructions are executed by one or more processors, the one or more processors are caused to implement the facial image-based risk recognition method in the above method embodiments, such as step S10 to step S50 shown in FIG. 2. Alternatively, when the computer-readable instructions are executed by the processors, the functions of the modules/units in the facial image-based risk recognition apparatus in the above embodiment, such as the functions of the module 10 to the module 50 shown in FIG. 8, are implemented. To avoid repetition, details are not described herein again. The readable storage media in this embodiment include a nonvolatile readable storage medium and a volatile readable storage medium.

Persons of ordinary skill in the art may understand that all or some of the processes of the method in the above embodiments may be implemented by instructing related hardware by using computer-readable instructions. The computer-readable instructions may be stored in a nonvolatile readable storage medium or a volatile readable storage medium. When the computer-readable instructions are executed, the processes in the above method embodiments may be implemented. Any reference to the memory, storage, database, or other media used in the embodiments provided in this application may include a nonvolatile and/or volatile memory. The nonvolatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. By way of illustration instead of limitation, the RAM is available in a plurality of forms, such as a static RAM (SRAM), a dynamic RAM (DRAM), a synchronous DRAM (SDRAM), a double data rate SDRAM (DDRSDRAM), an enhanced SDRAM (ESDRAM), a synchlink (Synchlink) DRAM (SLDRAM), a Rambus (Rambus) direct RAM (RDRAM), a direct Rambus dynamic RAM (DRDRAM), and a Rambus dynamic RAM (RDRAM).

A person skilled in the art may clearly understand that, for convenience and brevity of description, only the division of the above functional units or modules is used as an example for description. In actual application, the above functions may be allocated to different functional units or modules for implementation as required, that is, an internal structure of the apparatus is divided into different functional units or modules to implement all or some of the functions described above.

The above embodiments are merely intended to illustrate the technical solutions of this application, but not to limit them. Although this application is described in detail with reference to the above embodiments, persons of ordinary skill in the art should understand that they still can make modifications to the technical solutions described in the above embodiments or make equivalent replacements to some technical features thereof. These modifications or replacements do not deviate the essence of the corresponding technical solutions from the spirit and scope of the technical solutions in the embodiments of this application, and should be all included within the protection scope of this application.

**Claims**

1. A facial image-based risk recognition method, comprising:

    obtaining video data recorded when a customer answers a preset question;
    performing image recognition on the video data by using a pre-trained occlusion recognition model, wherein a recognition result comprises hand-occluded facial images and hand-unoccluded facial images;
    obtaining a hand-occluded facial position corresponding to each hand-occluded facial image, and obtaining a tension degree recognition result based on hand-occluded facial positions corresponding to all the hand-occluded facial images;

inputting the hand-unoccluded facial images into a pre-trained security determining model to obtain a risk degree recognition result; and

determining a risk warning recognition result based on the tension degree recognition result and the risk degree recognition result, wherein the video data is risk warning data if the risk warning recognition result is greater than a first preset threshold.

2. The facial image-based risk recognition method according to claim 1, before the step of performing image recognition on the video data by using a pre-trained occlusion recognition model, further comprising:

obtaining occlusion training images comprising hand-occluded training images and hand-unoccluded training images;

converting the hand-occluded training images and the hand-unoccluded training images into binary images, and determining facial regions of the binary images by using a facial keypoint recognition algorithm;

obtaining histogram of oriented gradient features corresponding to the facial regions based on the facial regions;

performing dimension reduction processing on the histogram of oriented gradient features by using a principal component analysis algorithm, to obtain target histogram of oriented gradient features; and

training the target histogram of oriented gradient features by using an SVM classification algorithm, to obtain the occlusion recognition model.

3. The facial image-based risk recognition method according to claim 1, wherein the obtaining a tension degree recognition result based on hand-occluded facial positions corresponding to all the hand-occluded facial images comprises:

obtaining an occlusion probability corresponding to each hand-occluded facial position based on the hand-occluded facial positions corresponding to all the hand-occluded facial images; and

inputting a hand-occluded facial image corresponding to the highest occlusion probability into a tension evaluation model, to obtain a tension degree corresponding to the hand-occluded facial image with the highest occlusion probability as the tension degree recognition result.

4. The facial image-based risk recognition method according to claim 1, wherein the inputting the hand-unoccluded facial images into a pre-trained security determining model to obtain a risk degree recognition result comprises:

performing clustering processing on the hand-unoccluded facial images by using a K-Means algorithm, to determine a hand-unoccluded facial image corresponding to a key frame; and inputting the hand-unoccluded facial image corresponding to the key frame into the pre-trained security determining model, to obtain a risk probability output by the security determining model as the risk degree recognition result.

5. The facial image-based risk recognition method according to claim 1, wherein the determining a risk warning recognition result based on the tension degree recognition result and the risk degree recognition result comprises:

obtaining a first total frame quantity corresponding to the hand-occluded facial images and a second total frame quantity corresponding to the hand-unoccluded facial images; and

determining the risk warning recognition result based on the first total frame quantity, the second total frame quantity, the tension degree recognition result, and the risk degree recognition result.

6. The facial image-based risk recognition method according to claim 5, wherein the determining the risk warning recognition result based on the first total frame quantity, the second total frame quantity, the tension degree recognition result, and the risk degree recognition result comprises:

calculating an absolute difference value of the first total frame quantity and the second total frame quantity; and

if the absolute difference value is greater than a second preset threshold, using the tension degree recognition result as the risk warning recognition result when the first total frame quantity is greater than the second total frame quantity, or using the risk degree recognition result as the risk warning recognition result when the first total frame quantity is less than the second total frame quantity; or

if the absolute difference value is not greater than the second preset threshold, calculating the tension degree recognition result and the risk degree recognition result by using a preconfigured result calculation formula, to obtain the risk warning recognition result.

7. A facial image-based risk recognition apparatus, comprising:

   a video data obtaining module, configured to obtain video data recorded when a customer answers a preset question;

   an image recognition module, configured to perform image recognition on the video data by using a pre-trained occlusion recognition model, wherein a recognition result comprises hand-occluded facial images and hand-unoccluded facial images;

   a first recognition result obtaining module, configured to obtain a hand-occluded facial position corresponding to each hand-occluded facial image, and obtain a tension degree recognition result based on hand-occluded facial positions corresponding to all the hand-occluded facial images;

   a second recognition result obtaining module, configured to input the hand-unoccluded facial images into a pre-trained security determining model to obtain a risk degree recognition result; and

   a risk determining module, configured to determine a risk warning recognition result based on the tension degree recognition result and the risk degree recognition result, wherein the video data is risk warning data if the risk warning recognition result is greater than a first preset threshold.

8. The facial image-based risk recognition apparatus according to claim 7, wherein the second recognition result obtaining module comprises:

   a key frame determining unit, configured to perform clustering processing on the hand-unoccluded facial images by using a K-Means algorithm, to determine a hand-unoccluded facial image corresponding to a key frame; and

   a risk degree recognition result determining unit, configured to input the hand-unoccluded facial image corresponding to the key frame into the pre-trained security determining model, to obtain a risk probability output by the security determining model as the risk degree recognition result.

9. A computer device, comprising a memory, a processor, and computer-readable instructions stored in the memory and executable on the processor, wherein the processor implements the following steps when executing the computer-readable instructions:

   obtaining video data recorded when a customer answers a preset question;

   performing image recognition on the video data by using a pre-trained occlusion recognition model, wherein a recognition result comprises hand-occluded facial images and hand-unoccluded facial images;

   obtaining a hand-occluded facial position corresponding to each hand-occluded facial image, and obtaining a tension degree recognition result based on hand-occluded facial positions corresponding to all the hand-occluded facial images;

   inputting the hand-unoccluded facial images into a pre-trained security determining model to obtain a risk degree recognition result; and

   determining a risk warning recognition result based on the tension degree recognition result and the risk degree recognition result, wherein the video data is risk warning data if the risk warning recognition result is greater than a first preset threshold.

10. The computer device according to claim 9, wherein before the step of performing image recognition on the video data by using a pre-trained occlusion recognition model, the processor further implements the following steps when executing the computer-readable instructions:

    obtaining occlusion training images comprising hand-occluded training images and hand-unoccluded training images;

    converting the hand-occluded training images and the hand-unoccluded training images into binary images, and determining facial regions of the binary images by using a facial keypoint recognition algorithm;

    obtaining histogram of oriented gradient features corresponding to the facial regions based on the facial regions;

    performing dimension reduction processing on the histogram of oriented gradient features by using a principal component analysis algorithm, to obtain target histogram of oriented gradient features; and

    training the target histogram of oriented gradient features by using an SVM classification algorithm, to obtain the occlusion recognition model.

11. The computer device according to claim 9, wherein the obtaining a tension degree recognition result based on hand-occluded facial positions corresponding to all the hand-occluded facial images comprises:

    obtaining an occlusion probability corresponding to each hand-occluded facial position based on the hand-occluded facial positions corresponding to all the hand-occluded facial images;

and

inputting a hand-occluded facial image corresponding to the highest occlusion probability into a tension evaluation model, to obtain a tension degree corresponding to the hand-occluded facial image with the highest occlusion probability as the tension degree recognition result.

12. The computer device according to claim 9, wherein the inputting the hand-unoccluded facial images into a pre-trained security determining model to obtain a risk degree recognition result comprises:

performing clustering processing on the hand-unoccluded facial images by using a K-Means algorithm, to determine a hand-unoccluded facial image corresponding to a key frame; and inputting the hand-unoccluded facial image corresponding to the key frame into the pre-trained security determining model, to obtain a risk probability output by the security determining model as the risk degree recognition result.

13. The computer device according to claim 9, wherein the determining a risk warning recognition result based on the tension degree recognition result and the risk degree recognition result comprises:

obtaining a first total frame quantity corresponding to the hand-occluded facial images and a second total frame quantity corresponding to the hand-unoccluded facial images; and determining the risk warning recognition result based on the first total frame quantity, the second total frame quantity, the tension degree recognition result, and the risk degree recognition result.

14. The computer device according to claim 13, wherein the determining the risk warning recognition result based on the first total frame quantity, the second total frame quantity, the tension degree recognition result, and the risk degree recognition result comprises:

calculating an absolute difference value of the first total frame quantity and the second total frame quantity; and if the absolute difference value is greater than a second preset threshold, using the tension degree recognition result as the risk warning recognition result when the first total frame quantity is greater than the second total frame quantity, or using the risk degree recognition result as the risk warning recognition result when the first total frame quantity is less than the second total frame quantity; or if the absolute difference value is not greater than the second preset threshold, calculating the tension degree recognition result and the risk degree recognition result by using a preconfigured result calculation formula, to obtain the risk warning recognition result.

15. One or more readable storage media storing computer-readable instructions, wherein the computer-readable storage media store the computer-readable instructions, and when the computer-readable instructions are executed by one or more processors, the one or more processors are caused to perform the following steps:

obtaining video data recorded when a customer answers a preset question; performing image recognition on the video data by using a pre-trained occlusion recognition model, wherein a recognition result comprises hand-occluded facial images and hand-unoccluded facial images; obtaining a hand-occluded facial position corresponding to each hand-occluded facial image, and obtaining a tension degree recognition result based on hand-occluded facial positions corresponding to all the hand-occluded facial images; inputting the hand-unoccluded facial images into a pre-trained security determining model to obtain a risk degree recognition result; and determining a risk warning recognition result based on the tension degree recognition result and the risk degree recognition result, wherein the video data is risk warning data if the risk warning recognition result is greater than a first preset threshold.

16. The readable storage media according to claim 15, wherein before the step of performing image recognition on the video data by using a pre-trained occlusion recognition model, when the computer-readable instructions are executed by the one or more processors, the one or more processors are caused to further perform the following steps:

obtaining occlusion training images comprising hand-occluded training images and hand-unoccluded training images; converting the hand-occluded training images and the hand-unoccluded training images into binary images, and determining facial regions of the binary images by using a facial keypoint recognition algorithm; obtaining histogram of oriented gradient features corresponding to the facial regions based on the facial regions; performing dimension reduction processing on the histogram of oriented gradient features by using a principal component analysis algorithm, to obtain target histogram of oriented gradient features; and

training the target histogram of oriented gradient features by using an SVM classification algorithm, to obtain the occlusion recognition model.

17. The readable storage media according to claim 15, wherein the obtaining a tension degree recognition result based on hand-occluded facial positions corresponding to all the hand-occluded facial images comprises:

obtaining an occlusion probability corresponding to each hand-occluded facial position based on the hand-occluded facial positions corresponding to all the hand-occluded facial images; and

inputting a hand-occluded facial image corresponding to the highest occlusion probability into a tension evaluation model, to obtain a tension degree corresponding to the hand-occluded facial image with the highest occlusion probability as the tension degree recognition result.

18. The readable storage media according to claim 15, wherein the inputting the hand-unoccluded facial images into a pre-trained security determining model to obtain a risk degree recognition result comprises:

performing clustering processing on the hand-unoccluded facial images by using a K-Means algorithm, to determine a hand-unoccluded facial image corresponding to a key frame; and inputting the hand-unoccluded facial image corresponding to the key frame into the pre-trained security determining model, to obtain a risk probability output by the security determining model as the risk degree recognition result.

19. The readable storage media according to claim 15, wherein the determining a risk warning recognition result based on the tension degree recognition result and the risk degree recognition result comprises:

obtaining a first total frame quantity corresponding to the hand-occluded facial images and a second total frame quantity corresponding to the hand-unoccluded facial images; and determining the risk warning recognition result based on the first total frame quantity, the second total frame quantity, the tension degree recognition result, and the risk degree recognition result.

20. The readable storage media according to claim 19, wherein the determining the risk warning recognition result based on the first total frame quantity, the second total frame quantity, the tension degree recognition result, and the risk degree recognition result comprises:

calculating an absolute difference value of the first total frame quantity and the second total frame quantity; and

if the absolute difference value is greater than a second preset threshold, using the tension degree recognition result as the risk warning recognition result when the first total frame quantity is greater than the second total frame quantity, or using the risk degree recognition result as the risk warning recognition result when the first total frame quantity is less than the second total frame quantity; or

if the absolute difference value is not greater than the second preset threshold, calculating the tension degree recognition result and the risk degree recognition result by using a preconfigured result calculation formula, to obtain the risk warning recognition result.

Client

Server

FIG. 1

| Obtain video data recorded when a customer answers a preset question | S10 |

| Perform image recognition on the video data by using a pre-trained occlusion recognition model, where a recognition result includes hand-occluded facial images and hand-unoccluded facial images | S20 |

| Obtain a hand-occluded facial position corresponding to each hand-occluded facial image, and obtain a tension degree recognition result based on hand-occluded facial positions corresponding to all the hand-occluded facial images | S30 |

| Input the hand-unoccluded facial images into a pre-trained security determining model to obtain a risk degree recognition result | S40 |

| Determine a risk warning recognition result based on the tension degree recognition result and the risk degree recognition result, where the video data is risk warning data if the risk warning recognition result is greater than a first preset threshold | S50 |

FIG. 2

| | |
|---|---|
| Obtain occlusion training images including hand-occluded training images and hand-unoccluded training images | S201 |
| Convert the hand-occluded training images and the hand-unoccluded training images into binary images, and determine facial regions of the binary images by using a facial keypoint recognition algorithm | S202 |
| Obtain histogram of oriented gradient features corresponding to the facial regions based on the facial regions | S203 |
| Perform dimension reduction processing on the histogram of oriented gradient features by using a principal component analysis algorithm, to obtain target histogram of oriented gradient features | S204 |
| Train the target histogram of oriented gradient features by using an SVM classification algorithm, to obtain the occlusion recognition model | S205 |

FIG. 3

| | |
|---|---|
| Obtain an occlusion probability corresponding to each hand-occluded facial position based on the hand-occluded facial positions corresponding to all the hand-occluded facial images | S31 |
| Input a hand-occluded facial image with the highest occlusion probability into a tension evaluation model, to obtain a tension degree corresponding to a hand-occluded facial position with the highest occlusion probability as the tension degree recognition result | S32 |

FIG. 4

| | |
|---|---|
| Perform clustering processing on the hand-unoccluded facial images by using a K-Means algorithm, to determine a hand-unoccluded facial image corresponding to a key frame | S41 |
| Input the hand-unoccluded facial image corresponding to the key frame into the pre-trained security determining model, to obtain a risk probability output by the security determining model as the risk degree recognition result | S42 |

FIG. 5

| | |
|---|---|
| Obtain a first total frame quantity corresponding to the hand-occluded facial images and a second total frame quantity corresponding to the hand-unoccluded facial images | S51 |
| Determine the risk warning recognition result based on the first total frame quantity, the second total frame quantity, the tension degree recognition result, and the risk degree recognition result | S52 |

FIG. 6

Calculate an absolute difference value of the first total frame quantity and the second total frame quantity —— S521

If the absolute difference value is greater than a second preset threshold, use the tension degree recognition result as the risk warning recognition result when the first total frame quantity is greater than the second total frame quantity, or use the risk degree recognition result as the risk warning recognition result when the first total frame quantity is less than the second total frame quantity —— S522

If the absolute difference value is not greater than the second preset threshold, calculate the tension degree recognition result and the risk degree recognition result by using a preconfigured result calculation formula, to obtain the risk warning recognition result —— S523

FIG. 7

Video data obtaining module —— 10

Image recognition module —— 20

First recognition result obtaining module —— 30

Second recognition result obtaining module

Key frame determining unit 41

Risk degree recognition result determining unit 42

—— 40

Risk determining module —— 50

FIG. 8

FIG. 9

<div align="center">

**INTERNATIONAL SEARCH REPORT**

</div>

| | International application No. |
|---|---|
| | **PCT/CN2019/120987** |

**A. CLASSIFICATION OF SUBJECT MATTER**

G06K 9/00(2006.01)i

According to International Patent Classification (IPC) or to both national classification and IPC

**B. FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNKI, CNPAT, WPI, IEEE: 遮挡, 遮盖, 遮蔽, 人脸, 面部, 识别, 紧张, 风险, occlusion, face, hand, tension, identify, safety, risk

**C. DOCUMENTS CONSIDERED TO BE RELEVANT**

| Category* | Citation of document, with indication, where appropriate, of the relevant passages | Relevant to claim No. |
|---|---|---|
| PX | CN 109711297 A (ONECONNECT TECHNOLOGY CO., LTD.) 03 May 2019 (2019-05-03) claims 1-10, description, paragraphs [0032]-[0127], and figure 2 | 1-20 |
| A | CN 108537160 A (PING AN TECHNOLOGY (SHENZHEN) CO., LTD.) 14 September 2018 (2018-09-14) description, paragraphs [0028]-[0048] and [0114]-[0146] | 1-20 |
| A | CN 105005765 A (BEIJING UNIVERSITY OF TECHNOLOGY) 28 October 2015 (2015-10-28) entire document | 1-20 |
| A | CN 102855496 A (SOOCHOW UNIVERSITY) 02 January 2013 (2013-01-02) entire document | 1-20 |
| A | US 9953211 B2 (NEC CORPORATION) 24 April 2018 (2018-04-24) entire document | 1-20 |
| A | US 7027620 B2 (SONY CORPORATION AND PURDUE RESEARCH FOUNDATION et al.) 11 April 2006 (2006-04-11) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 February 2020** | **04 March 2020** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/120987**

| Patent document cited in search report | | | Publication date (day/month/year) | Patent family member(s) | | | Publication date (day/month/year) |
|---|---|---|---|---|---|---|---|
| CN | 109711297 | A | 03 May 2019 | None | | | |
| CN | 108537160 | A | 14 September 2018 | WO | 2019184125 | A1 | 03 October 2019 |
| CN | 105005765 | A | 28 October 2015 | CN | 105005765 | B | 28 August 2018 |
| CN | 102855496 | A | 02 January 2013 | CN | 102855496 | B | 25 May 2016 |
| US | 9953211 | B2 | 24 April 2018 | JP | 6630999 | B2 | 15 January 2020 |
| | | | | US | 2016110586 | A1 | 21 April 2016 |
| | | | | JP | 2016081212 | A | 16 May 2016 |
| US | 7027620 | B2 | 11 April 2006 | US | 2003007669 | A1 | 09 January 2003 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811535312